Europäisches Patentamt

European Patent Office

Office européen des brevets

(11) Veröffentlichungsnummer: **0 302 988 B1**

# EUROPÄISCHE PATENTSCHRIFT

(45) Veröffentlichungstag der Patentschrift: **12.08.92**

(51) Int. Cl.⁵: **B62D 55/14**

(21) Anmeldenummer: **88102816.1**

(22) Anmeldetag: **25.02.88**

(54) **Laufrolle.**

(30) Priorität: **03.08.87 DE 8710631 U**

(43) Veröffentlichungstag der Anmeldung:
**15.02.89 Patentblatt 89/07**

(45) Bekanntmachung des Hinweises auf die
Patenterteilung:
**12.08.92 Patentblatt 92/33**

(84) Benannte Vertragsstaaten:
**CH DE IT LI NL**

(56) Entgegenhaltungen:
**EP-A- 0 005 937**
**DE-A- 2 541 776**
**DE-B- 1 939 240**
**DE-B- 2 164 288**
**DE-U- 8 700 292**

(73) Patentinhaber: **BERNEX OBERFLÄCHENME-
TALLURGIE GMBH**
**Helmholtzstrasse 4-6**
**W-4018 Langenfeld(DE)**

(72) Erfinder: **Der Erfinder hat auf seine Nennung
verzichtet**

(74) Vertreter: **Lehn, Werner, Dipl.-Ing. et al
Hoffmann, Eitle & Partner Patentanwälte Arabellastrasse 4
W-8000 München 81(DE)**

**Beschreibung**

Die Erfindung bezieht sich auf eine Laufrolle aus Aluminium, insbesondere für Kettenfahrzeuge, mit einer Gummibandage auf der Lauffläche der Laufrolle und mit einer Verschleißschutzschicht aus verschleißfestem Material im Bereich von Kettenführungszähnen, die aus einem hoch legierten Chromstahl im thermischen Metallspritzverfahren aufgebracht ist und eine stark geneigte Hauptverschleißzone, eine an deren einer Seite anschließende, unter die Gummibandage reichende waagerechte Sicherheitszone und eine an deren anderer Seite anschließende, nahezu senkrechte Auslaufzone: mit einer zur Laufrollenachse hin abnehmende Dicke aufweist.

Laufrollen moderner Kettenfahrzeuge werden aus Gründen der Gewichtsersparnis aus Aluminium hergestellt. Die Laufrollenrohlinge werden dabei entweder als Aluminium-Schmiedeteil im Gesenk geschmiedet oder aus Blechronden geformt.

Da der stählerne Kettenführungszahn an der Aluminiumrolle reibend anläuft und dort selbst in Verbindung mit Steinen, Sand und sonstigen abrasiv wirkenden Fremdkörpern erheblichen Verschleiß verursacht, werden die wenig verschleißfesten Aluminiumrollen im Kettenleitbereich mit einer Verschleißschutzschicht oder einem Verschleißschutzring versehen. Dies erfolgt bei bekannten Laufrollen durch Aufnieten von Stahlringen oder durch Aufspritzen von verschleißfesten Metallegierungen. Beispielsweise wird nach dem Metallspritzverfahren die Verschleißschutzschicht mit einer Chromstahl-Legierung angespritzt, wodurch die Laufzeit der Laufrolle beträchtlich verlängert werden konnte.

Eine Laufrolle der eingangs beschriebenen Art, die aus einem Aluminium-Schmiedeteil aus 3.1255 nach DIN 1725 mit einer als Dickschicht aufgebrachten Verschleißschutzschicht besteht, ist aus der DE-U-8 700 292 bekannt.

Weiter ist durch die DE-B-2 164 288 eine Laufrolle bekannt geworden, die aus einer aushärtbaren Aluminiumlegierung gegossen ist und einen vorgeformten, aufgeklammerten Verschleißschutzring aus Blech aufweist.

Mit fortschreitender Zeit ihres Einsatzes zeigen sich jedoch Gesichtspunkte, die eine weitere Verbesserung der Laufrolle wünschenswert erscheinen lassen. Im einzelnen können folgende Probleme auftreten.

Bei einem aufgenieteten Stahlring tritt die Gefahr des Abscherens der Nieten sowie die Gefahr der Unterkorrosion zwischen Stahlring und Aluminiumrolle auf. Dadurch ist ein allmähliches Loslösen des Verschleißschutzrings möglich.

Bei einer aufgespritzten Verschleißschutzschicht aus Metall muß als Kriterium der Laufleistung neben der Schichtdicke die wechselnde Haftzug- und Scherfestigkeitsbeanspruchung angesehen werden. Sie ist bedingt durch zahlreiche Einflußfaktoren des Metallspritzprozesses, wobei nur bei sorgfältigster Produktion gute Ergebnisse erzielt werden.

In verschiedenen Fällen haben sich auch Laufrollen-Deformationen infolge Überlastung ergeben. Dies tritt vor allem an den Laufrollen der Leiträder auf, wenn das Fahrzeug in ungünstigem Gelände aufsteht. Es kann aber auch sämtliche Laufrollen betreffen, wenn Hindernisse überklettert werden oder Steine zwischen Laufrolle und Kette gelangen. Hier ergäbe sich Abhilfe, wenn man allgemein die Querschnitte vergrößern oder festere Werkstoffe verwenden würde. Eine Vergrößerung der Querschnitte führt jedoch zu einer nicht unerheblichen Gewichtszunahme, und die Wahl festerer Leichtmetalle als die bereits verwendeten hochfesten Aluminiumlegierungen, die nicht mehr zu steigern sind, würde den Einsatz von Titan erforderlich machen, was aus Kostengründen nicht sinnvoll ist.

Weiter können die hohen Belastungen, denen Laufräder bisweilen durch aufkletternde Führungszähne der Kette ausgesetzt sind, zu partiellen Schichtausbrüchen führen.

Dementsprechend liegt der Erfindung die Aufgabe zugrunde, unter Zuhilfenahme einer Spritzschicht eine Laufrolle zu schaffen, welche noch leichter im Gewicht als eine geschmiedete ist und vorzugsweise zur Gewichtsverringerung des Fahrwerks beiträgt, so daß höhere Standzeiten als bei den bisher bekannten Laufrollen eintreten und daher mit einer wesentlich geringeren Wartung von Kettenfahrzeugen zu rechnen ist.

Diese Aufgabe wird erfindungsgemäß dadurch gelöst,
- daß die Laufrolle aus einer aushärtbaren Aluminium-Guß-Legierung hergestellt ist, und
- daß die Verschleißschutzschicht derart in der Schichtdicke an die jeweilige Funktionszone angepaßt ist,
  - daß die Hauptverschleißzone(s) eine Dicke a von 2 mm ± 0,5 mm aufweist, und
  - daß die Sicherheitszone eine zur Laufrollenaußenseite hin abnehmende Dicke aufweist.

Durch eine aufgespritzte Verschleißschutzschicht, die im Bandagenbereich verlängert ist, werden insbesondere die erwähnten partiellen Schichtausbrüche verhindert.

Der derart aufgespritzte Verschleißschutzring gemäß der Erfindung ist leicht auswechselbar, d.h. ohne Zerstörung des Laufrollenkörpers entfernbar. Er kann dann durch Spritzen wieder neu aufgebracht werden.

Mit einer derartigen Ausbildung der Verschleißschutzschicht lassen sich Laufleistungen der Laufrolle erreichen, die in der Größenordnung von und über der Laufleistung der Kette liegen.

Die abnehmenden Dicken der Sicherheitszone und der Auslaufzone erhöhen die Regenerationsfähigkeit.

Um ein seitliches Wegdrücken der Verschleißschutzschicht bei senkrechter Krafteinwirkung zu verhindern, ist die Hauptverschleißzone vorteilhaft unter einem Winkel α zur Lauffläche von nicht weniger als 30° bis 45°, vorzugsweise von etwa 30° bis 45°, angeordnet. Eine Änderung dieser Geometrie sollte nicht erfolgen.

Zur Verbesserung der Haftung der Verschleißschutzschicht auf dem Grundwerkstoff der Laufrolle ist vorteilhaft unter der Verschleißschutzschicht ein Haftgewinde vorgesehen, das eine Tiefe t von 0,6 mm und eine Steigung s von 1,2 mm aufweist.

Ergänzend kann zur Erhöhung der Haftung auf dem Haftgewinde eine Zwischenhaftschicht aufgespritzt sein, die vorteilhaft aus Molybdän mit einer Schichtdicke von etwa 0,1 mm besteht.

Die Auslaufzone ist vorteilhaft unter einem Winkel 90°-β zur Lauffläche von etwa 85° angeordnet.

Die Verschleißschutzschicht besteht vorteilhaft aus dem Material 1.4122 nach DIN 8566. Sie weist zweckmäßig eine Oberflächenhärte von etwa 350 HB auf.

Der Untergrund der Verschleißschutzschicht kann vorteilhaft vor deren Aufbringen gestrahlt sein. Weiter kann er vor dem Aufbringen der Verschleißschutzschicht erwärmt und gegebenenfalls sputtergereinigt sein.

Vorteilhaft wird eine verbesserte Haftung der Verschleißschutzschicht an der Laufrolle durch die Haftverzahnung an der Laufrolle erzielt. Dies ist besonders dann vorteilhaft, wenn sich durch die Schichtdicken innere Spannungen erhöhen.

Durch die neue Geometrie der Verschleißschutzschicht im Radiusbereich wird das Aufklettern der Kettenführungszähne weitgehend verhindert.

Die Erfindung ist im folgenden an einem Ausführungsbeispiel anhand der Zeichnung näher erläutert. In der Zeichnung zeigen:

Fig. 1    einen Schnitt durch einen Teil eines Ausführungsbeispiels der erfindungsgemäßen Laufrolle,

Fig. 2    einen Ausschnitt aus der Hauptverschleißzone der Verschleißschutzschicht in Fig. 1 in vergrößertem Maßstab,

Fig. 3    einen Schnitt durch einen Teil einer bekannten Laufrolle, und

Fig. 4    einen Ausschnitt aus der Hauptverschleißzone der Verschleißschutzschicht in Fig. 3 in vergrößertem Maßstab.

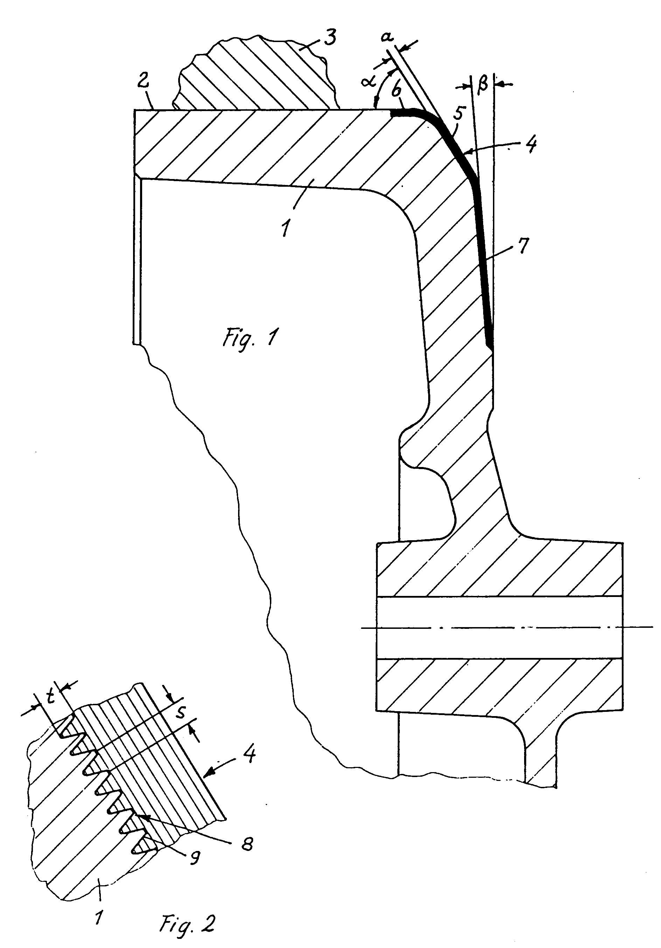

In der Zeichnung Fig. 1 und 2 ist ein bevorzugtes Ausführungsbeispiel einer erfindungsgemäßen Laufrolle 1 aus aushärtbarer Aluminium-Guß-Legierung gezeigt. Auf der Lauffläche 2 der Laufrolle 1 sitzt eine Gummibandage 3.

Im Bereich der nicht dargestellten Kettenführungszähne ist in einer entsprechenden Ausnehmung der Laufrolle 1 eine Verschleißschutzschicht 4 aus einem hochlegierten Chromstahl, die in der Schichtdicke an die jeweilige Funktionszone angepaßt ist, im thermischen Metallspritzverfahren aufgebracht. Die Verschleißschutzschicht besteht aus einer Hauptverschleißzone 5, einer Sicherheitszone 6 und einer Auslaufzone 7. Die Oberfläche der Hauptverschleißzone 5 ist unter einem Winkel α von vorzugsweise 30° bis 45° zur Lauffläche 2 angeordnet. Die Sicherheitszone 6 reicht unter die Gummibandage 3 und hat eine waagrechte Oberfläche. Die Oberfläche der Auslaufzone 7 ist unter einem kleinen Winkel β von vorzugsweise etwa 5° zur Senkrechten auf der Lauffläche 2 angeordnet.

Die Hauptverschleißzone 5 hat eine Dicke a von 2 mm ± 0,5 mm.

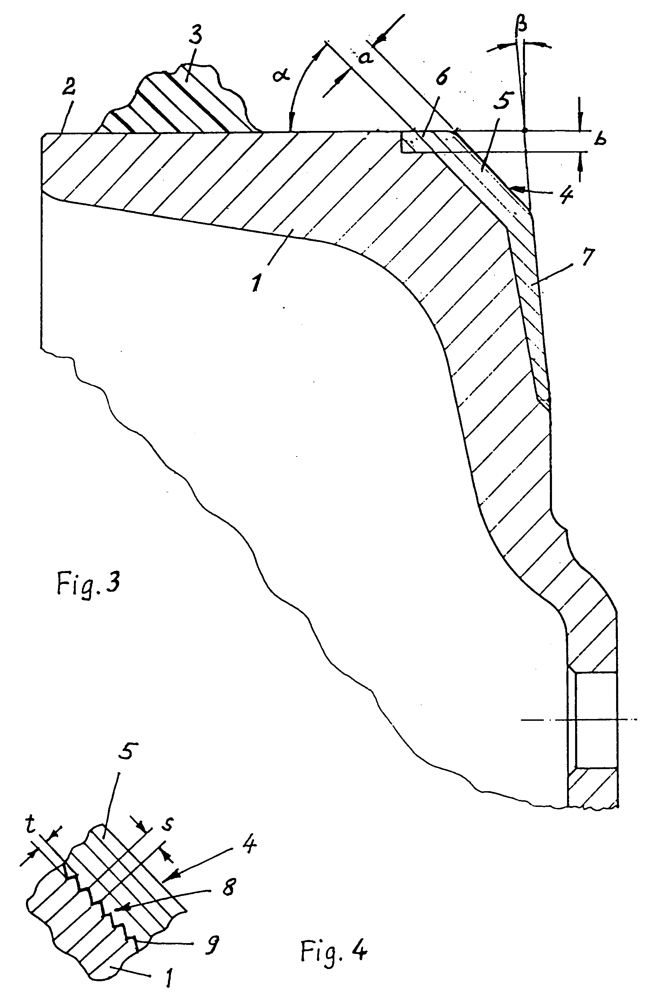

Die Sicherheitszone 6 und die Auslaufzone weisen, ausgehend von der Hauptverschleißzone 5, eine: zur Laufrollenaußenseite bzw. zur Laufrollenachse hin abnehmende Dicke auf (Fig. 1 und 2). Bei der bekannten Laufrolle nach Fig. 3 und 4 hat die Sicherheitszone 6 dagegen eine etwa konstante Dicke b von vorzugsweise etwa 5 mm.

Der Untergrund der Verschleißschutzschicht 4 auf der Laufrolle 1 kann vorteilhaft vor dem Aufbringen der Verschleißschutzschicht 4 gestrahlt, insbesondere sandgestrahlt, sein. Er kann auch vor dem Aufbringen der Verschleißschutzschicht 4 erwärmt und gegebenenfalls sputtergereinigt sein.

Zur Verbesserung der Haftung der Verschleißschutzschicht 4 auf der Laufrolle 1 ist Vorzugsweise ein Haftgewinde 8 vorgesehen, wie es in Fig. 2 und 4 angedeutet ist. Das Haftgewinde 8 hat vorzugsweise eine Tiefe t von 0,6 mm und eine Steigung s von 1,2 mm (Fig. 2).

Weiter kann ergänzend auf das Haftgewinde 8 eine Zwischenhaftschicht 9 aufgespritzt sein. Diese Zwischenhaftschicht 9 besteht z.B. vorzugsweise aus Molybdän mit einer Schichtdicke von etwa 0,1 mm.

Als Aufspritzwerkstoff für die Verschleißschutzschicht 4 wird bevorzugt Flammspritzdraht 1.4122 nach DIN 8566 verwendet. Als Richtwert für die Oberflächenhärte der Verschleißschutzschicht 4 ist etwa 350 HB in Abhängigkeit von den Spritzparametern anzusehen.

## Patentansprüche

1.    Laufrolle aus Aluminium, insbesondere für Kettenfahrzeuge, mit einer Gummibandage (3) auf der Lauffläche (2) der Laufrolle (1) und mit einer Verschleißschutzschicht (4) aus verschleißfestem Material im Bereich von Kettenführungszähnen, die aus einem hoch legierten Chromstahl im thermischen Metallspritzverfahren aufgebracht ist und eine stark geneigte Hauptverschleißzone (5), eine an deren einer Seite anschließende, unter die Gummibandage (3) reichende waagerechte Sicherheitszone (6) und eine an deren anderer Seite anschließende, nahezu senkrechte Auslaufzone (7) mit einer zur Laufrollenachse hin abnehmende Dicke aufweist,
dadurch **gekennzeichnet,**
- daß die Laufrolle (1) aus einer aushärtbaren Aluminium-Guß-Legierung hergestellt ist, und
- daß die Verschleißschutzschicht (4) derart in der Schichtdicke an die jeweilige Funktionszone angepaßt ist,
  - daß die Hauptverschleißzone (5) eine Dicke a von 2 mm ± 0,5 mm aufweist, und
  - daß die Sicherheitszone (6) eine zur Laufrollenaussenseite hin abnehmende Dicke aufweist.

2. Laufrolle nach Anspruch 1,
dadurch **gekennzeichnet,**
daß die Hauptverschleißzone (5) unter einem Winkel $\alpha$ zur Lauffläche (2) von nicht weniger als 30° bis 45° angeordnet ist.

3. Laufrolle nach Anspruch 2,
dadurch **gekennzeichnet,**
daß die Hauptverschleißzone (5) unter einem Winkel $\alpha$ zur Lauffläche (2) von etwa 30° bis 45° angeordnet ist.

4. Laufrolle nach einem der vorhergehenden Ansprüche,
dadurch **gekennzeichnet,**
daß unter der Verschleißschutzschicht (4) ein Haftgewinde (8) vorgesehen ist, die eine Tiefe t von 0,6 mm und eine Steigung s von 1,2 mm aufweist.

5. Laufrolle nach Anspruch 4,
dadurch **gekennzeichnet,**
daß auf dem Haftgewinde (8) eine Zwischenhaftschicht (9) aufgespritzt ist.

6. Laufrolle nach Anspruch 5,
dadurch **gekennzeichnet,**
daß die Zwischenhaftschicht (9) aus Molybdän mit einer Schichtdicke von etwa 0,1 mm besteht.

7. Laufrolle nach einem der vorhergehenden Ansprüche,
dadurch **gekennzeichnet,**
daß die Auslaufzone (7) unter einem Winkel 90°-$\beta$ zur Lauffläche (2) von etwa 85° angeordnet ist.

8. Laufrolle nach einem der vorhergehenden Ansprüche,
dadurch **gekennzeichnet,**
daß die Verschleißschutzschicht (4) aus dem Material 1.4122 nach DIN 8566 besteht.

9. Laufrolle nach einem der vorhergehenden Ansprüche,
dadurch **gekennzeichnet,**
daß die Verschleißschutzschicht (4) eine Oberflächenhärte von etwa 350 HB aufweist.

10. Laufrolle nach einem der vorhergehenden Ansprüche,
dadurch **gekennzeichnet,**
daß der Untergrund der Verschleißschutzschicht (4) vor deren Aufbringung gestrahlt ist.

11. Laufrolle nach einem der vorhergehenden Ansprüche,
dadurch **gekennzeichnet,**
daß der Untergrund der Verschleißschutzschicht (4) vor deren Aufbringung erwärmt ist.

12. Laufrolle nach einem der vorhergehenden Ansprüche,
dadurch **gekennzeichnet,**
daß der Untergrund der Verschleißschutzschicht (4) vor deren Aufbringung erwärmt und sputtergereinigt ist.

**Claims**

1. A track roller composed of aluminium, in particular for track-laying vehicles, comprising a rubber tyre (3) on the tread surface (2) of the track roller (1) and comprising a wear protection layer (4) composed of wear-resistant material in the region of chain-guide teeth, wherein said wear protection layer (4) is composed of a high-alloyed chromium steel and is applied by a thermal metal spraying process, and comprising a steeply inclined main wear zone (5), a horizontal safety zone (6) which adjoins one side of the main wear zone (5) and extends beneath the rubber tyre (3), and comprising a virtually perpendicular run-out zone (7) which adjoins the other side of the main wear zone (5) and which possesses a thickness which reduces in the direction of the track roller axis, characterised in that
   - the track roller (1) is produced from a hardenable aluminium-casting alloy and that
- the wear protection layer (4) is adapted in respect of its layer thickness to the respective function zone in such manner that
  - the main wear zone (5) has a thickness a of 2 mm ± 0.5 mm and
  - the safety zone (6) has a thickness which reduces in the direction of the exterior of the track roller.

2. A track roller as claimed in Claim 1, characterised in that the main wear zone (5) is arranged at an angle $\alpha$ relative to the tread surface (2) of not less than 30° to 45°.

3. A track roller as claimed in Claim 2, characterised in that the main wear zone (5) is arranged at an angle $\alpha$ relative to the tread surface (2) of approximately 30° to 45°.

4. A track roller as claimed in one of the preceding claims, characterised in that an adhesive thread (8) which has a depth t of 0.6 mm and a pitch s of 1.2 mm is arranged beneath the wear protection layer (4).

5. A track roller as claimed in Claim 4, characterised in that an intermediate adhesive layer (9) is sprayed onto the adhesive thread (8).

6. A track roller as claimed in Claim 5, characterised in that the intermediate adhesive layer (9) is composed of molybdenum and has a thickness of approximately 0.1 mm.

7. A track roller as claimed in one of the preceding claims, characterised in that the run-out zone (7) is arranged at an angle $90°-\beta$ relative to the tread surface (2) of approximately 85°.

8. A track roller as claimed in one of the preceding claims, characterised in that the wear protection layer (4) is composed of material 1,4122 in accordance with DIN 8566.

9. A track roller as claimed in one of the preceding claims, characterised in that the wear protection layer (4) has a surface hardness of approximately 350 HB.

10. A track roller as claimed in one of the preceding claims, characterised in that the base of the wear protection layer (4) is abrasively blasted prior to the application of the layer (4).

11. A track roller as claimed in one of the preceding claims, characterised in that the base of the wear protection layer (4) is heated prior to the application of the layer (4).

12. A track roller as claimed in one of the preceding claims, characterised in that the base of the wear protection layer (4) is heated and sputter-cleaned prior to the application of the layer (4).

**Revendications**

1. Galet de roulement en aluminium, en particulier pour véhicule chenillés, avec un bandage en caoutchouc (3) placé sur la surface de roulement (2) du galet de roulement (1) et avec une couche de protection contre l'usure (4), en un matériau résistant à l'usure, dans la zone des dents de guidage des chaînes, composée d'un acier au chrome fortement allié appliqué à partir d'un procédé de projection métallique par voie thermique, et présente une zone d'usure principale (5), fortement inclinée, une zone de sécurité (6) horizontale, lui étant connexe sur un côté et arrivant sous le bandage en caoutchouc (3), et une zone de fuite (7), connexe sur son autre côté et à peu près perpendiculaire, avec une épaisseur allant en diminuant vers l'axe du galet de roulement, caractérisé en ce que
   - le galet de roulement (1) est fabriqué à partir d'un alliage aluminium-fonte, durcissable, et
   - en ce que l'épaisseur de couche de la couche de protection contre l'usure (4) est adaptée à la zone fonctionnelle spécifique, de telle façon que
     - la zone d'usure principale (5) présente une épaisseur a de 2 mm ± 0,5 mm, et
     - la zone de sécurité (6) présente une épaisseur allant en diminuant vers la face extérieur du galet de roulement.

2. Galet de roulement selon la revendication 1, caractérisé en ce que la zone d'usure principale (5) est disposée par rapport à la surface de roulement (2) en faisant un angle $\alpha$ qui n'est pas inférieur à 30° à 45°.

3. Galet de roulement selon la revendication 2, caractérisé en ce que la zone d'usure principale (5) est disposée par rapport à la surface de roulement (2) en faisant un angle $\alpha$ d'à peu près 30° à 45°.

4. Galet de roulement selon l'une des revendications précédentes, caractérisé en ce que sous la couche de protection contre l'usure (4) est prévue un filetage d'adhérence (8) qui présente une épaisseur $t$ de 0,6 mm et un pas $s$ de 1,2 mm.

5. Galet de roulement selon la revendication 4, caractérisé en ce qu'une couche d'adhérence intermédiaire (9) est appliquée par projection sur le filetage d'adhérence (8).

6. Galet de roulement selon la revendication 5, caractérisé en ce que la couche d'adhérence intermédiaire (9) est en molybdène, avec une épaisseur de couche d'à peu près 0,1 mm.

7. Galet de roulement selon l'une des revendications précédentes, caractérisé en ce que la zone de fuite (7) est disposée par rapport à la surface de roulement (2) en faisant un angle $90° - \beta$ d'à peu près 85°.

8. Galet de roulement selon l'une des revendications précédentes, caractérisé en ce que la couche de protection contre l'usure (4) est composée du matériau 1.4122, selon DIN 8566.

9. Galet de roulement selon l'une des revendications précédentes, caractérisé en ce que la couche de protection contre l'usure (4) présente une dureté superficielle d'à peu près 350 HB.

10. Galet de roulement selon l'une des revendications précédentes, caractérisé en ce que le fond sous-jacent à la couche de protection contre l'usure (4) est soumis à un rayonnement avant son application.

11. Galet de roulement selon l'une des revendications précédentes, caractérisé en ce que le fond sous-jacent à la couche de protection contre l'usure (4) est chauffé avant son application.

12. Galet de roulement selon l'une des revendications précédentes, caractérisé en ce que le fond sous-jacent à la couche de protection contre l'usure (4) est chauffé avant son application et soumis à un nettoyage par pulvérisation.

Fig. 1

Fig. 2

Fig. 3

Fig. 4